# EUROPEAN PATENT APPLICATION

(11) **EP 4 700 839 A2**
(43) Date of publication of application: **25.02.2026**
(21) Application number: 25196920.0
(22) Date of filing: 20.08.2025
(51) Int. Cl.: H01M 4/13, H01M 4/66

(54) **ELECTRODES FOR RECHARGEABLE LITHIUM BATTERY AND RECHARGEABLE LITHIUM BATTERY INCLUDING THE SAME**

(30) Priority: 22.08.2024 KR 20240112922
(71) Applicant: SAMSUNG SDI CO., LTD., Yongin-si, Gyeonggi-do 17084 (KR)
(72) Inventor: DO, Ui Song, Yongin-si, Gyeonggi-do 17084 (KR); SUH, SOONSUNG, Yongin-si, Gyeonggi-do 17084 (KR); EOM, Hyeri, Yongin-si, Gyeonggi-do 17084 (KR); IN, Jinhyuk, Yongin-si, Gyeonggi-do 17084 (KR); LEE, DongHun, Yongin-si, Gyeonggi-do 17084 (KR); PARK, Jeonghoon, Yongin-si, Gyeonggi-do 17084 (KR)
(74) Representative: Michalski Hüttermann & Partner Patentanwälte mbB

(57) **Abstract**

Examples of the disclosure include an electrode for a rechargeable lithium battery, and a preparation method of the electrode. The electrode includes a current collector, an active material layer on the current collector, and a protection layer on the current collector and in contact with one side surface of the active material layer. The protection layer includes a first protection layer having a first binder on the current collector, and a second protection layer having a second binder on the first protection layer, and the first binder and the second binder may be different from each other.

## Description

### CROSS-REFERENCE TO RELATED APPLICATIONS

This U.S. non-provisional patent application claims priority under 35 U.S.C. § 119 of Korean Patent Application No. 10-2024-0112922, filed on August 22, 2024, the entire contents of which are herein incorporated by reference.

### BACKGROUND

Examples of the present disclosure herein relate to an electrode for a rechargeable lithium battery, and a rechargeable lithium battery including the electrode.

With increasing presence of battery-using electronic devices, such as, e.g., mobile phones, laptop computers, electric vehicles, and the like, demand for a rechargeable battery with high energy density and high capacity has increased. Accordingly, improving performance of rechargeable lithium batteries may be advantageous.

A rechargeable lithium battery typically includes a positive electrode and a negative electrode, each including an active material capable of intercalation and deintercalation of lithium ions, and an electrolyte solution. Electrical energy is typically produced by oxidation and reduction reactions when the lithium ions are intercalated and deintercalated into/from the positive electrode and the negative electrode.

### SUMMARY

Examples of the present disclosure include an electrode for a rechargeable lithium battery that is desired or improved in mass productivity and stability.

Examples of the present disclosure also include a rechargeable lithium battery including the electrode for a rechargeable lithium battery.

An example embodiment of the present disclosure includes an electrode for a rechargeable lithium battery including a current collector; an active material layer on the current collector; and a protection layer on the current collector and in contact with one side surface of the active material layer. The protection layer includes a first protection layer having a first binder on the current collector, and a second protection layer having a second binder on the first protection layer, and the first binder and the second binder are different from each other.

In an example embodiment of the present disclosure, an electrode for a rechargeable lithium battery includes a current collector having a base portion and an uncoated portion; an active material layer on the current collector; and a protection layer on the current collector and in contact with one side surface of the active material layer. The protection layer includes a first protection layer on the current collector, and a second protection layer on the first protection layer, and a thickness of the protection layer is smaller than a thickness of the active material layer.

In an example embodiment of the present disclosure, a rechargeable lithium battery includes a positive electrode, a negative electrode, and a separator, the positive electrode includes a current collector, a positive electrode active material layer, and a protection layer, the negative electrode includes a current collector, a negative electrode active material layer, and the protection layer. The protection layer includes a first protection layer on the current collector, and a second protection layer on the first protection layer. The first protection layer includes a first binder, the second protection layer includes a second binder, and the first binder and the second binder have different materials.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:
FIG. 1 is a simplified conceptual diagram illustrating a rechargeable lithium battery according to embodiments of the present disclosure;
FIGS. 2 to 5 are schematic views each illustrating a rechargeable lithium battery according to an example embodiment, where FIG. 2 shows a cylindrical battery, FIG. 3 shows a prismatic battery, and FIGS. 4 and 5 show pouch-type batteries;
FIG. 6 is a cross-sectional view of an electrode according to an example embodiment of the present disclosure; and
FIGS. 7A, 7B, 8A, and 8B are plan views and cross-sectional views illustrating a preparation method of an electrode for a rechargeable lithium battery, according to an example embodiment of the present disclosure.

### DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that, when an element is referred to as being "on" another element, the element may be "directly on" the other element, or intervening elements may be present therebetween. In the drawings, thicknesses of components may be exaggerated for effectively explaining the technical contents. Like reference numerals or symbols refer to like elements throughout the specification.

Example embodiments described herein are explained with reference to cross-sectional views and/or plan views, which are ideal illustrations of the present disclosure. The regions illustrated in the drawings have schematic properties, and the shapes of the regions illustrated in the drawings are intended to illustrate a given shape of the regions of an element, and are not intended to limit the scope of the disclosure. In various example embodiments of the present specification, terms such as first, second, and third are used to describe various components, but these components should not be limited by these terms. These terms are merely used to distinguish one component from another. Example embodiments described and illustrated herein also include complementary embodiments thereof.

The singular forms are intended to include the plural forms as well, unless the context clearly indicates otherwise. In addition, unless otherwise specially noted, the phrase "A or B" may indicate "including A but not B, B but not A, or A and B." The terms "comprises/includes" and/or "comprising/including" used in this description do not exclude the presence or addition of one or more other components.

In this specification, "combination thereof" may refer to a mixture, a stack, a composite, a copolymer, an alloy, a blend, and a reaction product of components.

In this specification, unless specially defined otherwise, a particle diameter may refer to an average particle diameter. Also, the particle diameter indicates an average particle diameter (D50), which refers to a diameter of particles at a cumulative volume of about 50 vol% in a particle size distribution. The average particle diameter (D50) may be measured by a method known to those skilled in the art, for example, may be measured by a particle size analyzer, or may also be measured using a transmission electron microscope (TEM) image or a scanning electron microscope (SEM) image. Alternatively, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

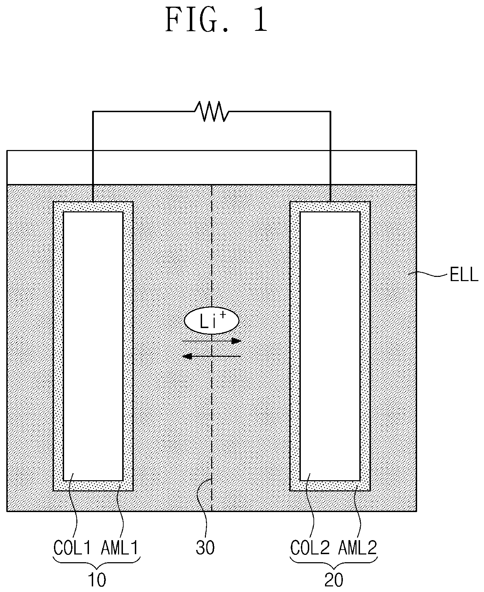

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1, and a positive electrode active material layer AML1 formed on the current collector COL1. The positive electrode active material layer AML1 may include a positive electrode active material, and may further include a binder and/or a conductive material (e.g., an electrically conductive material).

For example, the positive electrode 10 may further include an additive that may be configured as a sacrificial positive electrode.

An amount of the positive electrode active material in the positive electrode active material layer AML1 may be in a range of ≥ 90 wt% to ≤ 99.5 wt% based on 100 wt% of the positive electrode active material layer AML1. An amount of each of the binder and the conductive material may be in a range of ≥ 0.5 wt% to ≤ 5 wt% based on 100 wt% of the positive electrode active material layer AML1.

The binder is configured to attach the positive electrode active material particles to each other, and to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, may be included in the battery. Examples of the conductive material may include a carbon-based material such as at least one of natural graphite, artificial graphite, carbon black, acetylene black, ketjen black, a carbon fiber, a carbon nanofiber, and carbon nanotube (SWCNT, multi-wall CNT); a metal-based material including at least one of copper, nickel, aluminum, silver, and the like, in the form of a metal powder or a metal fiber; a conductive polymer such as a polyphenylene derivative; or a mixture thereof.

Al may be included as the current collector COL1, but the material of the current collector COL1 is not limited thereto.

For example, the area of the current collector COL1 may be substantially the same as the area of the positive electrode active material layer AML1. In this specification, the substantially same areas may indicate that the difference between the two areas is in a range of about 10% or less. For another example, the area of the current collector COL1 may be different from the area of the positive electrode active material layer AML1. In this specification, the different areas may indicate that the difference between the two areas is greater than about 10%. For example, the area of the current collector COL1 may be larger than the area of the positive electrode active material layer AML1.

### Positive Electrode Active Material

The positive electrode active material in the positive electrode active material layer AML1 may include a compound (lithiated intercalation compound) that is capable of reversibly intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following formulas may be included. LiₐA_{1-b}X_{b}O_{2-c}D_{c}(0.90≤a≤1.8, 0≤b≤0.5, and 0≤c≤0.05); LiₐMn_{2-b}X_{b}O_{4-c}D_{c}(0.90≤a≤1.8, 0≤b≤0.5, and 0≤c≤0.05); LiₐNi_{1-b-c}Co_{b}X_{c}O_{2-α}D_{α}(0.90≤a≤1.8, 0≤b≤0.5, and 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, and 0<α<2); LiₐNi_{b}Co_{c}L¹aGₑO₂(0.90≤a≤1.8, 0≤b≤0.9, 0≤c≤0.5, 0≤d≤0.5, and 0≤e≤0.1); LiₐNiG_{b}O₂(0.90≤a≤1.8 and 0.001≤b≤0.1); LiₐCoG_{b}O₂(0.90≤a≤1.8 and 0.001≤b≤0.1); LiₐMn_{1-b}G_{b}O₂(0.90≤a≤1.8 and 0.001≤b≤0.1); LiₐMn₂G_{b}O₄(0.90≤a≤1.8 and 0.001≤b≤0.1); LiₐMn_{1-g}G_{g}PO₄(0.90≤a≤1.8 and 0≤g≤0.5); Li_{(3-f)}Fe₂(PO₄)₃(0≤f≤2); and LiₐFePO₄(0.90≤a≤1.8).

In the above formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be, or include for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be configured to achieve high capacity, and may thus be applied to a high-capacity and high-density rechargeable lithium battery.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include ≥ 90 wt% to ≤ 99 wt% of the negative electrode active material, ≥ 0.5 wt% to ≤ 5 wt% of the binder, and ≥ 0 wt% to ≤ 5 wt% of the conductive material.

The binder may be configured to attach the negative electrode active material particles to each other, and to attach the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrilebutadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, may be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

For example, the area of the current collector COL2 may be substantially the same as the area of the negative electrode active material layer AML2. For another example, the area of the current collector COL2 may be different from the area of the negative electrode active material layer AML2. For example, the area of the current collector COL2 may be larger than the area of the negative electrode active material layer AML2.

### Negative Electrode Active Material

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphereshaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon applied onto the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one or both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond), and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed and used, and the cyclic carbonate and the chain carbonate may be mixed in a volume ratio in a range of about 1: 1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Rechargeable Lithium Battery

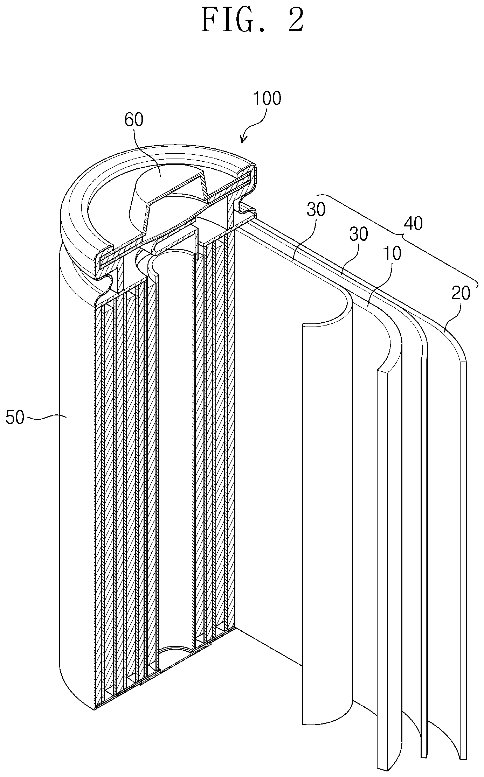

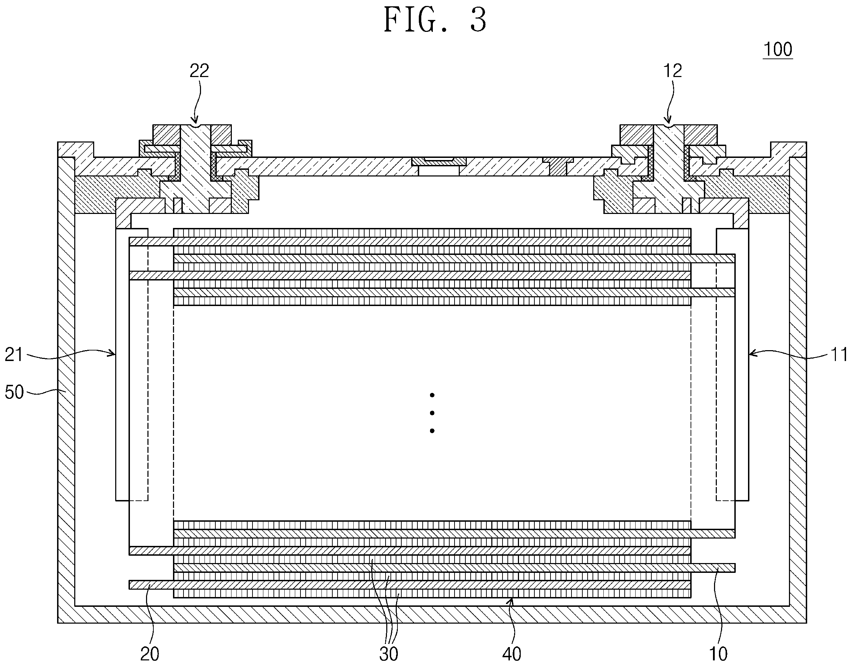

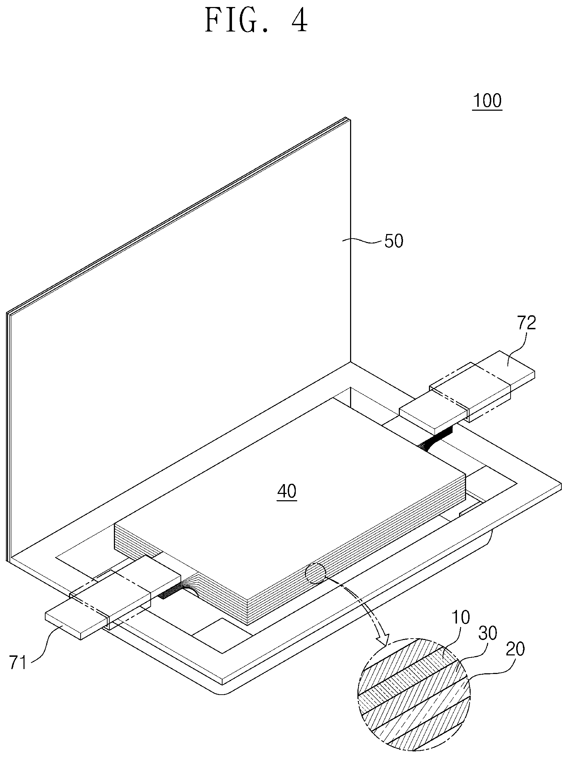

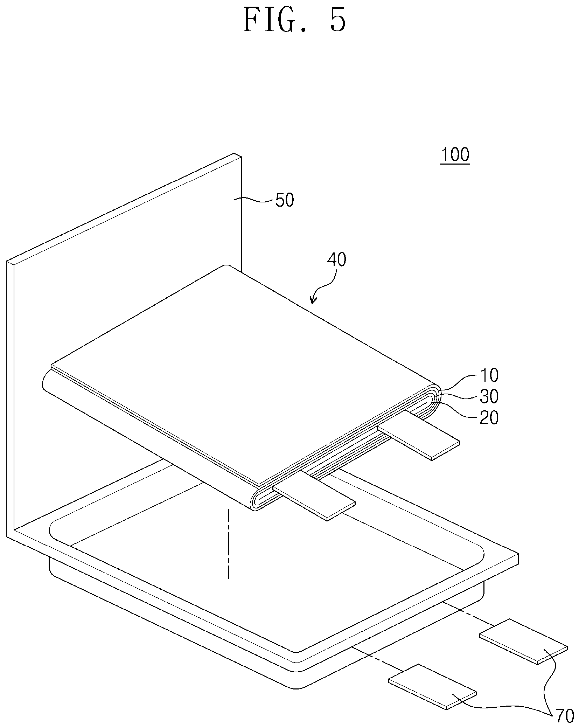

The rechargeable lithium battery may be classified into cylindrical, prismatic, pouch, coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12, a negative lead tab 21, and a negative terminal 22. As illustrated in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside.

The rechargeable lithium battery according to an example embodiment may be applicable to, e.g., automobiles, mobile phones, and/or various types of electric devices, as non-limiting examples.

In example embodiments of the present disclosure to be described below, a detailed description of technical features overlapping with the rechargeable lithium battery described above with reference to FIGS. 1 to 5 is omitted, and differences therewith are described in detail.

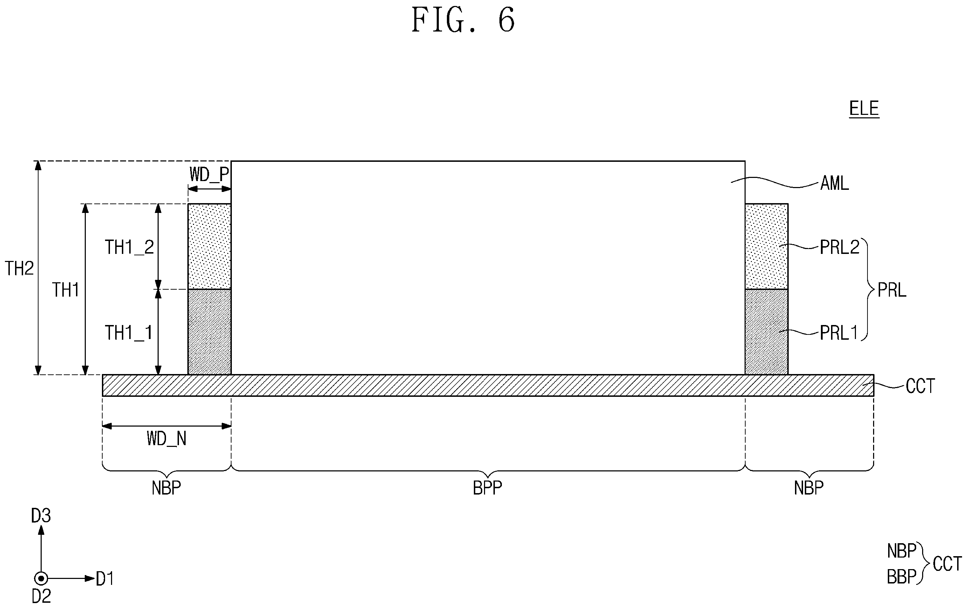

FIG. 6 is a cross-sectional view of an electrode ELE for a rechargeable lithium battery according to an example embodiment of the present disclosure. That is, the electrode ELE illustrated in FIG. 6 may correspond to the positive electrode 10 or the negative electrode 20 described above.

The electrode ELE for a rechargeable lithium battery according to an example embodiment of the present disclosure may include a current collector CCT, an active material layer AML on the current collector CCT, and a protection layer PRL formed on the current collector CCT and in contact with one side surface of the active material layer AML.

The current collector CCT may correspond to the current collector COL1 of the positive electrode 10 or to the current collector COL2 of the negative electrode 20, described above. The current collector CCT may include a base portion BPP and an uncoated portion NBP on both sides of the base portion BPP. The active material layer AML may be formed on the base portion BPP of the current collector CCT, and the protection layer PRL may be formed on the uncoated portion NBP of the current collector CCT.

The active material layer AML may correspond to the positive electrode active material layer AML1 of the positive electrode 10 or the negative electrode active material layer AML2 of the negative electrode 20, described above.

The protection layer PRL may be formed on the uncoated portion NBP of the current collector CCT, and may be in contact with one side surface of the active material layer AML. The protection layer PRL may include a first protection layer PRL1 on the uncoated portion NBP of the current collector CCT, and a second protection layer PRL2 on the first protection layer PRL1. The protection layer PRL may include a plurality of films or a plurality of layers. The protection layer PRL according to an example embodiment of the present disclosure may have a double-layer structure including the first and second protection layers PRL1 and PRL2.

The first protection layer PRL1 may include a first binder. The first binder may be or include an acrylate-based binder. The acrylate-based binder may be or include a material with desired or improved adhesive strength. Since the first protection layer PRL1 includes the acrylate-based binder, deformation of the uncoated portion NBP may be reduced or prevented. That is, due to the presence of the acrylate-based binder, crumpling, wrinkle, or tearing which might be formed on the uncoated portion NBP may be reduced or prevented.

The first binder may include at least one of, for example, urethane acrylate, polyester acrylate, epoxy acrylate and silicone acrylate, hydroxyethyl acrylate (HEA), hydroxyethyl methacrylate (HEMA), 1,6-hexanediol diacrylate (HDDA), tripropylene glycol diacrylate (TPGDA), trimethylolpropane triacrylate (TMPTA), pentaerythritol triacrylate (PETA), and dipentaerythritol hexaacrylate (DPHA).

The second protection layer PRL2 may include a second binder. The second binder may be or include a rubber-based binder. The rubber-based binder may be or include a material with desired or improved flexibility. Because the second protection layer PRL2 includes the rubber-based binder, stability may be improved in a process of preparing the electrode ELE for a rechargeable lithium battery. For example, due to the presence of the rubber-based binder, the uncoated portion NBP and the first protection layer PRL1 may be substantially protected, and accordingly, an electrode for a rechargeable lithium battery with improved stability may be provided.

The second binder may include at least one of, for example, a nitrile-butadiene rubber, a styrene-butadiene rubber, neoprene, an ethylene-propylene rubber, a polyurethane rubber, a polybutadiene rubber, a silicone rubber, an ethylene-propylene-diene rubber, a polyisoprene rubber, a polychloroprene rubber, and a fluorocarbon rubber.

The first binder included in the first protection layer PRL1 and the second binder included in the second protection layer PRL2 may include different materials. For example, the first binder includes an acrylate-based binder, and the second binder includes a rubber-based binder, and thus, costs may be reduced in preparing the electrode ELE for a rechargeable lithium battery. Therefore, mass productivity of the rechargeable lithium battery may be improved.

The first protection layer PRL1 and the second protection layer PRL2 may each independently further include a polyimide-based binder and a carbon material. The polyimide-based binder may be or include an additive for preparing a protection layer slurry in a preparation method of the electrode ELE for a rechargeable lithium battery, to be described below. For example, the polyimide-based binder may include at least one of 4,4'-oxydiphenylene-pyromellitimide, polyetherimide, polyimide, biphenyl dianhydride-p-phenylenediamine, p-phenylene biphenyltetracarboxylic imide , naphthalenetetracarboxylic dianhydride-oxydianiline, pyromellitic dianhydride-4,4'-oxydianiline, benzophenonetetracarboxylic dianhydride-phenylenediamine, hexafluoroisopropylidene diphthalic anhydride-p-phenylenediamine, and biphenyltetracarboxylic dianhydride-p-phenylenediamine.

The carbon material may include at least one of graphite, carbon black, acetylene black, ketjen black, a carbon fiber, a carbon nanotube, or graphene. For example, the carbon material may be or include carbon black.

For example, the first protection layer PRL1 may include the first binder in the amount in a range of ≥ 40 wt% to ≤ 80 wt%, the polyimide-based binder in the amount in a range of ≥ 10 wt% to ≤ 20 wt%, and the carbon material in the amount in a range of ≥ 10 wt% to ≤ 30 wt%. In particular, the first protection layer PRL1 may include the first binder in the amount in a range of ≥ 30 wt% to ≤ 60 wt%. When the amount of the first binder falls within the above-described range, deformation of the uncoated portion NBP may be reduced or prevented, and therefore, stability of the electrode ELE for a rechargeable lithium battery may be improved.

For example, the second protection layer PRL2 may include the second binder in the amount in a range of ≥ 40 wt% to ≤ 80 wt%, the polyimide-based binder in the amount in a range of ≥ 10 wt% to ≤ 20 wt%, and the carbon material in the amount in a range of ≥ 10 wt% to ≤ 30 wt%. In particular, the second protection layer PRL2 may include the second binder in the amount in a range of ≥ 30 wt% to ≤ 60 wt%. When the amount of the second binder falls within the above-described range, the uncoated portion NBP and the first protection layer PRL1 may be double-protected, and therefore, stability of the electrode ELE for a rechargeable lithium battery may be improved.

In one example, the protection layer PRL may include a first protection layer PRL1 on the uncoated portion NBP of the current collector CCT, and a second protection layer PRL2 on the first protection layer PRL1; and the first binder may be or include an acrylate-based binder as described above, and the first protection layer PRL1 may include the first binder in the amount in a range of ≥ 40 wt% to ≤ 80 wt%, the polyimide-based binder in the amount in a range of ≥ 10 wt% to ≤ 20 wt%, and the carbon material in the amount in a range of ≥ 10 wt% to ≤ 30 wt%; and the second binder may be or include a rubber-based binder as described above, and the second protection layer PRL2 may include the second binder in the amount in a range of ≥ 40 wt% to ≤ 80 wt%, the polyimide-based binder in the amount in a range of ≥ 10 wt% to ≤ 20 wt%, and the carbon material in the amount in a range of ≥ 10 wt% to ≤ 30 wt%. Accordingly, deformation of the uncoated portion NBP may be reduced or prevented, and the uncoated portion NBP and the first protection layer PRL1 may be double-protected, thereby further improving the stability of the electrode ELE for a rechargeable lithium battery.

The protection layer PRL may have a first thickness TH1 in a third direction D3, and the active material layer AML may have a second thickness TH2 in the third direction D3. The first thickness TH1 of the protection layer PRL may be equal to the sum of a third thickness TH1_1 of the first protection layer PRL1 and a fourth thickness TH1_2 of the second protection layer PRL2. In an example embodiment, the third thickness TH1_1 of the first protection layer PRL1 and the fourth thickness TH1_2 of the second protection layer PRL2 may be substantially the same. In another example embodiment, the third thickness TH1_1 of the first protection layer PRL1 and the fourth thickness TH1_2 of the second protection layer PRL2 may be different from each other.

In one example embodiment, the protection layer PRL may include a first protection layer PRL1 on the uncoated portion NBP of the current collector CCT, and a second protection layer PRL2 on the first protection layer PRL1; and the third thickness TH1_1 of the first protection layer PRL1 and the fourth thickness TH1_2 of the second protection layer PRL2 may be substantially the same. Further, as described above, the first protection layer PRL1 may be or may include the first binder, and the second protection layer PRL2 may be or may include the second binder, and the types and amounts of the first and second binders may be the same as previously described.

In one example embodiment, the protection layer PRL may include a first protection layer PRL1 on the uncoated portion NBP of the current collector CCT, and a second protection layer PRL2 on the first protection layer PRL1; and the third thickness TH1_1 of the first protection layer PRL1 and the fourth thickness TH1_2 of the second protection layer PRL2 may be different from each other. Further, as described above, the first protection layer PRL1 may be or may include the first binder, and the second protection layer PRL2 may be or may include the second binder, and the types and amounts of the first and second binders may be the same as previously described.

The first thickness TH1 of the protection layer PRL may be smaller than the second thickness TH2 of the active material layer AML. That is, the second thickness TH2 of the active material layer AML may be larger than the sum of the third thickness TH1_1 of the first protection layer PRL1 and the fourth thickness TH1_2 of the second protection layer PRL2.

In one example embodiment, the protection layer PRL may include a first protection layer PRL1 on the uncoated portion NBP of the current collector CCT, and a second protection layer PRL2 on the first protection layer PRL1; and first thickness TH1 of the protection layer PRL may be smaller than the second thickness TH2 of the active material layer AML. Further, as described above, the first protection layer PRL1 may be or may include the first binder, and the second protection layer PRL2 may be or may include the second binder, and the types and amounts of the first and second binders may be the same as previously described.

The first thickness TH1 of the protection layer PRL may be in a range of ≥ 50% to ≤ 95% of the second thickness TH2 of the active material layer AML, for example, ≥ 60% to ≤ 90% of the second thickness TH2 of the active material layer AML, and in another example, ≥ 70% to ≤ 90% of the second thickness TH2 of the active material layer AML. In other words, a level of the uppermost surface of the active material layer AML may be higher than a level of the uppermost surface of the protection layer PRL in the third direction D3.

In one example embodiment, the protection layer PRL may include a first protection layer PRL1 on the uncoated portion NBP of the current collector CCT, and a second protection layer PRL2 on the first protection layer PRL1; and the first thickness TH1 of the protection layer PRL may be in a range of ≥ 50% to ≤ 95% of the second thickness TH2 of the active material layer AML, for example, ≥ 60% to ≤ 90% of the second thickness TH2 of the active material layer AML, and in another example, ≥ 70% to ≤ 90% of the second thickness. Further, as described above, the first protection layer PRL1 may be or may include the first binder, and the second protection layer PRL2 may be or may include the second binder, and the types and amounts of the first and second binders may be the same as previously described. The protection layer PRL may have a first width WD_P in a first direction D1, and the uncoated portion NBP of the current collector CCT may have a second width WD_N in the first direction D1. That is, the second width WD_N of the uncoated portion NBP may be defined as a horizontal distance of a portion of the current collector CCT where the active material layer AML is not disposed.

The second width WD_N of the uncoated portion NBP may be larger than the first width WD_P of the protection layer PRL. The first width WD_P of the protection layer PRL may be in a range of ≥ 1/6 to ≤ 1/2 of the second width WD_N of the uncoated portion NBP, and for example, ≥ 1/6 to ≤ 1/3 of the second width WD_N of the uncoated portion NBP. For example, the first width WD_P of the protection layer PRL may be in a range of ≥ 2 mm to ≤ 7 mm, for example, ≥ 3 mm to ≤ 6 mm, and for example ≥ 3 mm to ≤ 5 mm.

In one example embodiment, the protection layer PRL may include a first protection layer PRL1 on the uncoated portion NBP of the current collector CCT, and a second protection layer PRL2 on the first protection layer PRL1; and the second width WD_N of the uncoated portion NBP may be larger than the first width WD_P of the protection layer PRL. Further, the first width WD_P of the protection layer PRL may be in a range of ≥ 1/6 to ≤ 1/2 of the second width WD_N of the uncoated portion NBP, and for example, ≥ 1/6 to ≤ 1/3 of the second width WD_N of the uncoated portion NBP. the first width WD_P of the protection layer PRL may be in a range of ≥ 2 mm to ≤ 7 mm, for example, ≥ 3 mm to ≤ 6 mm, and for example ≥ 3 mm to ≤ 5 mm. Further, as described above, the first protection layer PRL1 may be or may include the first binder, and the second protection layer PRL2 may be or may include the second binder, and the types and amounts of the first and second binders may be the same as previously described.

When the thickness TH1 and the width WD_P of the protection layer PRL fall within the above-described ranges, respectively, stability of the electrode ELE for a rechargeable lithium battery may be effectively improved, and stability of the rechargeable lithium battery including the electrode ELE may also be effectively improved.

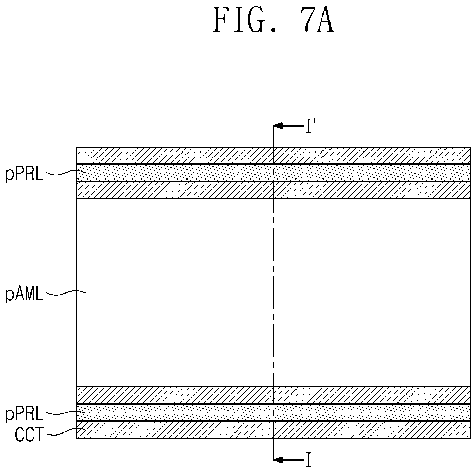

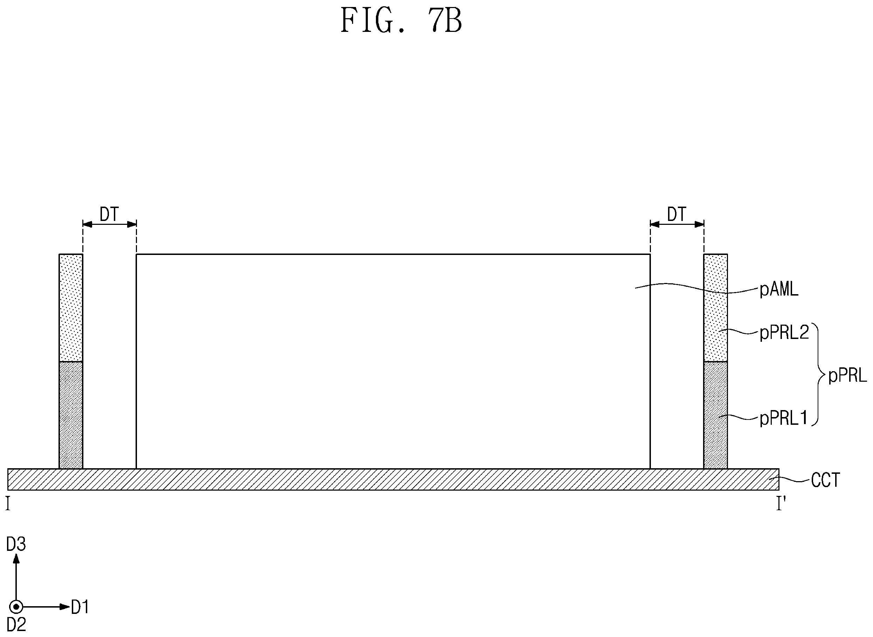

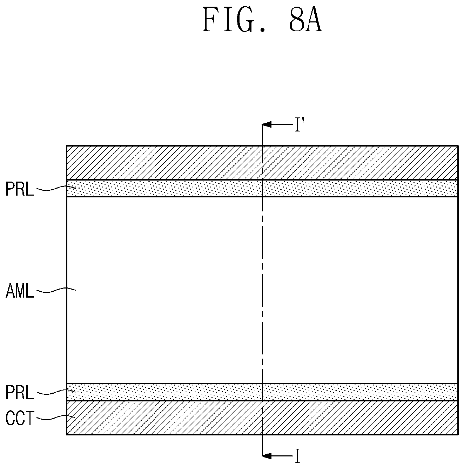

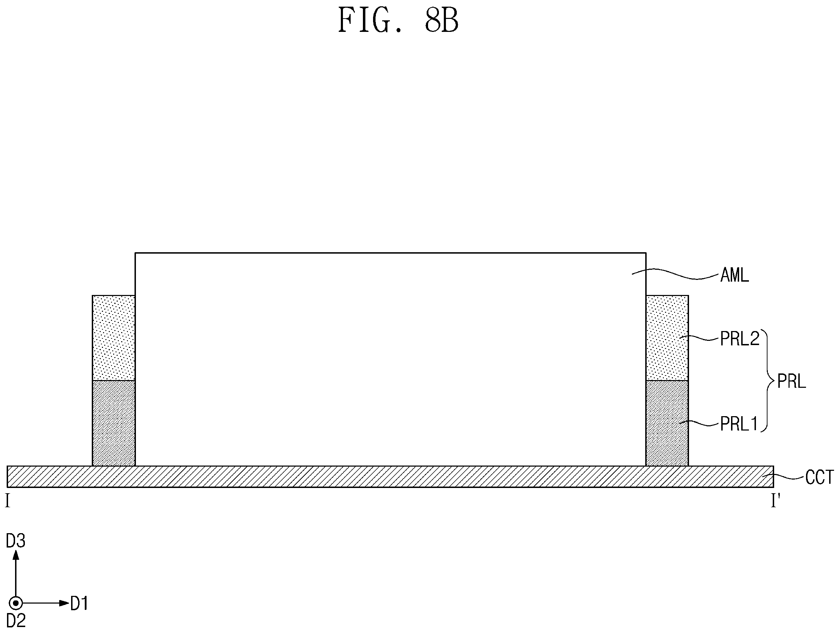

FIGS. 7A, 7B, 8A, and 8B are plan views and cross-sectional views illustrating a preparation method of an electrode for a rechargeable lithium battery, according to an example embodiment of the present disclosure.

FIG. 7A is a plan view illustrating an active material slurry AML and a protection layer slurry PRL applied onto a current collector CCT, and FIG. 7B is a cross-sectional view according to line I-I' of FIG. 7A.

Referring to FIGS. 7A and 7B, an active material slurry may be applied onto the current collector CCT. The active material slurry may be or include a slurry in which the positive electrode active material, the binder, and the conductive material, described above, are mixed, or a slurry in which the negative electrode active material, the binder, and the conductive material, described above, are mixed. The active material slurry may be applied such that the active material slurry does not cover the entire surface on the current collector CCT. That is, the active material slurry may be applied onto a base portion of the current collector CCT, and may not be applied onto an uncoated portion of the current collector CCT.

After the active material slurry is applied, a protection layer slurry may be applied onto the current collector CCT such that the protection layer slurry is spaced apart from the active material slurry at a predetermined or desired distance DT. The protection layer slurry may include a first slurry in which a first binder, a polyimide-based binder, and a carbon material are mixed, and a second slurry in which a second binder, a polyimide-based binder, and a carbon material are mixed. The protection layer slurry may be applied onto the uncoated portion of the current collector CCT. In particular, the first slurry of the protection layer slurry may be applied onto the uncoated portion, and the second slurry of the protection layer slurry may be applied onto the first slurry.

Referring to FIGS. 8A and 8B, the active material slurry and the protection layer slurry are applied together to form an electrode. Since the protection layer slurry has a flowing nature, even though the protection layer slurry is applied apart from the active material slurry at the predetermined or desired distance DT, the predetermined distance DT may be narrowed when applied. That is, by applying the active material slurry and the protection layer slurry together, a protection layer PRL may be formed on a side surface of an active material layer AML. The protection layer PRL may include a first protection layer PRL1 formed from the first slurry, and a second protection layer PRL2 formed from the second slurry. In other words, an electrode for a rechargeable lithium battery according to an example embodiment of the present disclosure may include the protection layer PRL formed to have a double layer from the protection layer slurry.

Hereinafter, examples of the present disclosure are described in more detail as follows. However, the following examples are only intended to aid understanding of the present disclosure, and the scope of the present disclosure is not limited thereto.

### Example 1

### Preparation of Protection Layer

An Al foil having a thickness of about 10 µm as a current collector of a positive electrode was prepared, and a Cu foil having a thickness of about 6 µm as a current collector of a negative electrode was prepared. In addition, a lithium transition metal composite oxide was prepared as a positive electrode active material, and a transition metal oxide and a carbon-based material were prepared as a negative electrode active material. A first mixed solution in which a first binder, a polyimide-based binder, and a carbon material were mixed in a weight ratio of about 5:3:2 was prepared, and a second mixed solution in which a second binder, a polyimide-based binder, and a carbon material were mixed in a weight ratio of about 5:3:2 was prepared. Thereafter, the first mixed solution was agitated, as ultra-pure water was added slowly to the first mixed solution, to prepare a first slurry, and the second mixed solution was agitated, as ultra-pure water was added slowly to the second mixed solution, to prepare a second slurry. The prepared first slurry and second slurry, which was used as a protection layer slurry, were applied onto an edge portion of the current collector sheet using a bar coater. Thereafter, the prepared positive electrode active material or the negative electrode active material and the protection layer slurry were applied using the bar coater, and dried at about 80 °C for about 10 minutes in the air.

A protection layer, formed from the protection layer slurry, has a double-layer structure of a first protection layer and a second protection layer. The first binder in the amount of about 50 wt%, the polyimide-based binder in the amount of about 30 wt%, and the carbon material in the amount of about 20 wt% were included to prepare the first protection layer, and the second binder in the amount of about 50 wt%, the polyimide-based binder in the amount of about 30 wt%, and the carbon material in the amount of about 20 wt% were included to prepare the second protection layer.

A rechargeable lithium battery including the protection layer was prepared.

### Example 2

A rechargeable lithium battery including the same protection layer as described above for Example 1 above was prepared, with a difference that the first binder in the amount of about 40 wt%, the polyimide-based binder in the amount of about 40 wt%, and the carbon material in the amount of about 20 wt% were included to prepare the first protection layer, and the second binder in the amount of about 40 wt%, the polyimide-based binder in the amount of about 40 wt%, and the carbon material in the amount of about 20 wt% were included to prepare the second protection layer.

### Comparative Example

A rechargeable lithium battery which is the same as described in Example 1 above, with a difference that the protection layer was omitted, was prepared.

### Evaluation Example: Stability

A Sine test (f=55 Hz; force = 25 gf; duration =1 hr, 3 axes) was conducted for rechargeable lithium batteries prepared according to the Examples and Comparative Example to monitor the level of stability of components. In particular, 10 samples for each of the examples and comparative example were prepared, and then the sine test was conducted. Based on the number of cells where deformation occurred in the uncoated portions among the 10 samples, the results of the stability test were classified into ○○ (excellent, 0 to 1 deformed cell), ○ (good, 2 to 3 deformed cells), △ (fair, 4 to 6 deformed cells), and X (poor, 7 to 10 deformed cells). The classification results are listed in Table 1 below.

**Table 1:**

| | Impact stability |
|---|---|
| Example 1 | ○○ |
| Example 2 | ○ |
| Comparative Example | X |

Referring to Table 1 above, it can be seen that the rechargeable lithium batteries according to Examples 1 and 2, where the protection layers were formed, had relatively less or no wrinkle, crumpling, or tearing occurring in the uncoated portions, exhibiting substantially desired or improved stability. On the other hand, it can be seen that the rechargeable lithium battery according to the comparative example, where the protection layer was not formed, had deformation occurring in the uncoated portion, and the stability was deteriorated.

Because an electrode for a rechargeable lithium battery according to an example embodiment of the present disclosure includes a protection layer formed on one side of an active material layer, damage and deformation of an uncoated portion of the electrode may be reduced or prevented during a process of preparing the rechargeable lithium battery. Because the protection layer is formed as a double layer, stability of the electrode for a rechargeable lithium battery may be improved.

Because the electrode for a rechargeable lithium battery according to an example embodiment of the present disclosure includes the protection layer, and the protection layer includes a rubber-based binder and an acrylate-based binder, it may be possible to reduce the cost of preparing the electrode for a rechargeable lithium battery. That is, as the cost of preparing the electrode for a rechargeable lithium battery is reduced, mass productivity of the rechargeable lithium battery including the electrode may be improved.

Although the example embodiments of the present disclosure have been described with reference to the accompanying drawings, it is understood that the present disclosure should not be limited to these example embodiments but various changes and modifications can be made within the scope of the claims, the detailed description of the present disclosure, and the accompanying drawings, and this also falls within the scope of the present disclosure.

## Claims

1. An electrode (ELE) for a rechargeable lithium battery (100), the electrode (ELE) comprising:
a current collector (CCT);
an active material layer (AML) on the current collector (CCT); and
a protection layer (PRL) on the current collector (CCT), and in contact with one side surface of the active material layer (AML),
wherein the protection layer (PRL) includes:
a first protection layer (PRL1) comprising a first binder on the current collector (CCT); and
a second protection layer (PRL2) comprising a second binder on the first protection layer (PRL1), and
the first binder and the second binder are different from each other.

2. The electrode (ELE) of claim 1, wherein the first binder comprises at least one of urethane acrylate, polyester acrylate, epoxy acrylate, silicone acrylate, hydroxy ethyl acrylate, hydroxyethyl methacrylate, 1,6-hexanediol diacrylate, tripropylene glycol diacrylate, trimethylolpropane triacrylate, pentaerythritol triacrylate, and dipentaerythritol hexaacrylate.

3. The electrode (ELE) of claim 1 or 2, wherein the second binder comprises at least one of a nitrile-butadiene rubber, a styrene-butadiene rubber, neoprene, an ethylene-propylene rubber, a polyurethane rubber, a polybutadiene rubber, a silicone rubber, an ethylene-propylene-diene rubber, a polyisoprene rubber, a polychloroprene rubber, and a fluorocarbon rubber.

4. The electrode (ELE) according to any one of claims 1 to 3, wherein at least one of the first protection layer (PRL1) and the second protection layer (PRL2) further comprises a polyimide-based binder and a carbon material.

5. The electrode (ELE) of claim 4, wherein the polyimide-based binder comprises at least one of 4,4'-oxydiphenylene-pyromellitimide, polyetherimide, polyimide, biphenyl dianhydride-p-phenylenediamine, p-phenylene biphenyltetracarboxylic imide, naphthalenetetracarboxylic dianhydride-oxydianiline, pyromellitic dianhydride-4,4'-oxydianiline, benzophenonetetracarboxylic dianhydride-phenylenediamine, hexafluoroisopropylidene diphthalic anhydride-p-phenylenediamine, and biphenyltetracarboxylic dianhydride-p-phenylenediamine.

6. The electrode (ELE) of claim 4 or 5, wherein at least one of the first protection layer (PRL1) and the second protection layer (PRL2) further comprises a polyimide-based binder and/or a carbon material, wherein the carbon material comprises at least one of graphite, carbon black, acetylene black, ketjen black, a carbon fiber, a carbon nanotube, or graphene.

7. The electrode (ELE) according to any one of claims 1 to 6, wherein an amount of the first binder in the first protection layer (PRL1) is in a range of ≥ 30 wt% to ≤ 60 wt%.

8. The electrode (ELE) according to any one of claims 1 to 7, wherein an amount of the second binder in the second protection layer (PRL2) is in a range of ≥ 30 wt% to ≤ 60 wt%.

9. The electrode (ELE) according to any one of claims 1 to 8, wherein a thickness of the active material layer (AML) is larger than a sum of a thickness of the first protection layer (PRL1) and a thickness of the second protection layer (PRL2).

10. An electrode (ELE) for a rechargeable lithium battery (100), the electrode (ELE) comprising:
a current collector (CCT) including a base portion and an uncoated portion (NBP);
an active material layer (AML) on the current collector (CCT); and
a protection layer (PRL) on the current collector (CCT) and in contact with one side surface of the active material layer (AML),
wherein the protection layer (PRL) includes:
a first protection layer (PRL1) on the current collector (CCT), and
a second protection layer (PRL2) on the first protection layer (PRL1), and
a thickness of the protection layer (PRL) is smaller than a thickness of the active material layer (AML).

11. The electrode (ELE) of claim 10, wherein the thickness of the protection layer (PRL) is in a range of ≥ 70% to ≤ 90% of the thickness of the active material layer (AML).

12. The electrode (ELE) of claim 10 or 11, wherein the thickness of the protection layer (PRL) is equal to a sum of a thickness of the first protection layer (PRL1) and a thickness of the second protection layer (PRL2), and
the thickness of the first protection layer (PRL1) and the thickness of the second protection layer (PRL2) are different from each other.

13. The electrode (ELE) according to any one of claims 10 to 12, wherein a thickness of the first protection layer (PRL1) and a thickness of the second protection layer (PRL2) are substantially the same.

14. The electrode (ELE) according to any one of claims 10 to 13, wherein a width of the protection layer (PRL) is in a range of ≥ 3 mm to ≤ 5 mm.

15. The electrode (ELE) according to any one of claims 10 to 14, wherein a width of the uncoated portion (NBP) is larger than a width of the protection layer (PRL).
